# FASCICULE DE BREVET EUROPEEN

(11) **EP 3 041 741 B1**
(45) Date de publication et mention de la délivrance du brevet: **03.10.2018**
(21) Numéro de dépôt: 14786979.6
(22) Date de dépôt: 25.08.2014
(51) Int. Cl.: B64D 27/26, F01D 25/16, F01D 25/24

(54) **STRUCTURE DE CARTER INTERPOSEE ENTRE LE MOTEUR ET LA NACELLE A PLATINE A VIS**
STRUKTURGEHÄUSE, ANGEORDNET ZWISCHEN TRIEBWERK UND TRIEBWERKSGONDEL, MIT EINER DIE BEFESTIGUNGSBOLZEN TRAGENDE BEFESTIGUNGSPLATTE
CASING STRUCTURE ARRANGED BETWEEN AN ENGINE AND A NACELLE, THE CASING STRUCTURE COMPRISING A FIXATION PLATE CARRYING ATTACHMENT BOLTS

(30) Priorité: 04.09.2013 FR 1358475
(43) Date de publication de la demande: 13.07.2016
(73) Titulaire: Safran Aircraft Engines, 75015 Paris (FR)
(72) Inventeur: BELJAMBE, Ceddric, F-77550 Moissy-Cramayel Cedex (FR); ROBIN, Noël, F-77550 Moissy-Cramayel Cedex (FR)
(74) Mandataire: David, Alain
(86) Numéro de dépôt international: PCT/FR2014/052120
(87) Numéro de publication internationale: WO 2015/033041

(56) Documents cités:
- WO-A2-2010/007220
- CH-A1- 705 514
- US-A- 4 993 918

## Description

### Arrière-plan de l'invention

La présente invention se rapporte au domaine des moteurs d'aéronef, par exemple des turboréacteurs, et elle concerne plus particulièrement une structure de carter interposée entre le moteur et la nacelle. L'état de l'art est illustré par le document WO 2010/007220 A2.

Comme il est connu, une telle structure doit assurer, outre la jonction mécanique entre le moteur et la nacelle :
- la continuité de la veine aérodynamique du flux secondaire ;
- le passage et le maintien des servitudes (électrique, mécanique, hydraulique) entre les différents composants du moteur (core, fan, etc...) et la nacelle de ce moteur ;
- la protection au feu entre les différents compartiments du moteur et le flux secondaire ;
- l'accessibilité aux équipements et aux servitudes pour la maintenance.

Cette structure de carter est constituée d'un cadre cylindrique sectorisé (ou secteurs de virole) de faible largeur (de l'ordre de quelques centaines de millimètres selon l'axe moteur) devant permettre un accès aisé aux équipements qu'il recouvre (par exemple des bielles de reprise de poussée ou encore différents vérins d'actionnement de servitudes) dès l'ouverture de la nacelle et d'au moins un bras radial disposé autour de ce cadre. Classiquement, le cadre supporte des écopes du système de déchargement d'air (booster VBV).

Les temps de maintenance devant être optimisés, le cadre apparait donc comme un obstacle à l'accès aux équipements placés en dessous de lui et qui doivent pouvoir être déposés, changés, vérifiés... sous aile dès l'ouverture de la nacelle, en prenant en compte le temps de montage et démontage du cadre lui-même, dans un temps limité et dépendant de l'application.

Il existe donc un besoin d'une structure de carter qui permette d'assurer un accès facilité à ces équipements (c'est-à-dire compatible avec les temps de maintenance au sol autorisés) tout en réalisant l'ensemble des fonctions précitées et notamment une réduction des perturbations dans la veine aérodynamique.

De plus, on se doit de prendre en compte le déplacement relatif (<2mm) existant entre la virole de carter intermédiaire et le moyeu de carter intermédiaire qui impacte directement la liaison entre les bras et les secteurs de virole interdisant tout montage de vis à tête fraisée pourtant obligatoire pour réduire les impacts aérodynamiques.

### Objet et résumé de l'invention

La présente invention a donc pour but principal de pallier de tels inconvénients en proposant une structure de carter interposée entre le moteur et la nacelle d'un aéronef comportant :
une virole entourant le moteur et comprenant une pluralité de secteurs, une pluralité de bras radiaux chacun monté entre deux secteurs de virole adjacents et comportant chacun une base,
une pluralité de moyens de fixation de ladite pluralité de secteurs de virole sur lesdites bases de ladite pluralité de bras radiaux,
caractérisée en ce que ladite pluralité de moyens de fixation comporte une pluralité de platines montées chacune à effleurement dans des rainures de forme correspondante de ladite pluralité de secteurs de virole et un ensemble de vis à tête maintenues captives de ladite platine par une différence de diamètre entre leur corps et leur filetage,
un ensemble d'écrous prisonniers étant fixé sur lesdites bases pour, en recevant chacun ledit filetage d'une vis captive dudit ensemble de vis à tête, assurer une liaison solidaire entre ladite pluralité de secteurs de virole et de ladite pluralité de bras radiaux.

Ainsi, l'adjonction d'une platine à vis captives (dites aussi imperdables) permet de retirer très simplement et rapidement un ou plusieurs secteurs de virole pour accéder aux équipements qu'elle protège.

De préférence, la longueur de ladite platine correspond sensiblement à la largeur de ladite virole.

Avantageusement, pour recevoir lesdites vis captives, ladite platine comporte des orifices qui s'étendent, en forme de puits, en deçà de sa surface, lesdits puits assurant en outre, en traversant ladite base, un centrage de ladite platine sur ladite base.

De préférence, lesdits orifices comportent à leur entrée des chanfreins pour s'adapter aux têtes desdites vis captives et ainsi permettre leur affleurement.

Avantageusement, lesdits écrous prisonniers sont réalisés en deux parties, une première partie formant l'écrou proprement dit étant réalisé en un premier matériau et une seconde partie, formant cage de retenue et faisant fonction de clip, étant réalisé en un second matériau plus souple que le premier et permettant sa fixation sur ladite base au niveau d'une partie en saillie pratiquée dans un perçage de cette base destiné à recevoir ladite vis captive. Lesdites première et deuxième parties sont solidarisées entres elles par des pattes qui assurent la retenue de l'écrou en venant se loger sous une collerette dudit écrou.

De préférence, ladite platine comporte des moyens de détrompage.

L'invention concerne également tout moteur d'aéronef comportant une structure de carter telle que précitée.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue en perspective d'une structure de carter interposée entre le moteur et la nacelle conforme à l'invention ;
- la figure 2 est une vue en coupe de la structure de carter de la figure 1 ; et
- la figure 2A est un détail de la figure 2 au niveau d'une vis de liaison.

### Description détaillée d'un mode de réalisation

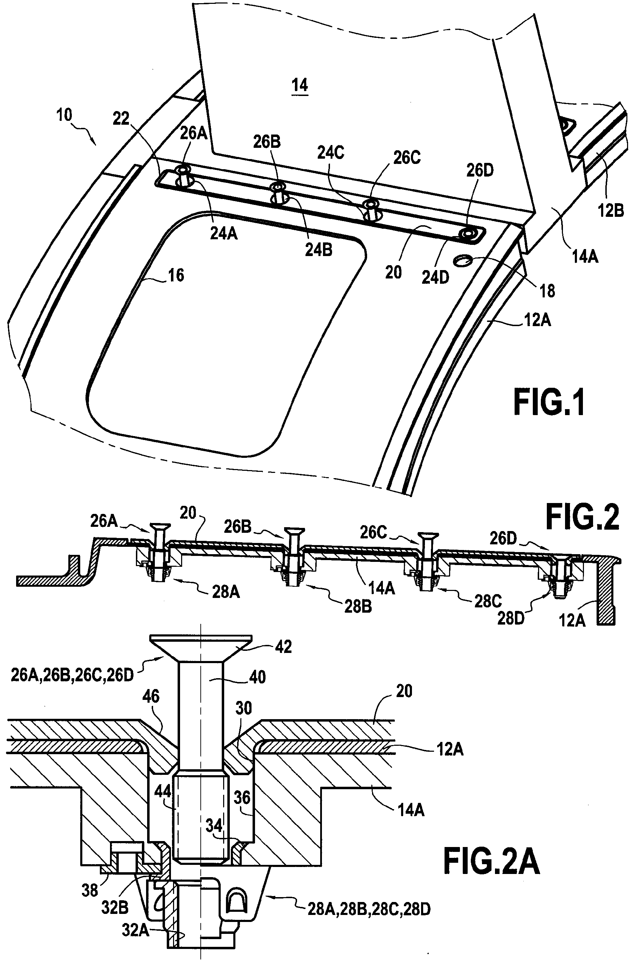

Les figures 1 et 2 représentent respectivement en perspective et en coupe une partie de la structure de carter 10 interposée entre le moteur et la nacelle d'un aéronef, typiquement un turboréacteur, qui se présente sous la forme d'une virole sectorisée (dont seuls les secteurs 12A, 12B sont représentés) reliée par au moins un bras radial 14 de support du carter de la nacelle présentant sensiblement une forme de T inversé avec une base 14A se prolongeant de chaque côté et pouvant présenter la même courbure que le secteur de virole. Selon la circonférence du moteur, la position des équipements comme les bielles de reprise de poussée, les vérins actionnant les VBV ou VSV par exemple, la virole peut comporter par exemple jusqu'à huit secteurs adjacents dissociables les uns des autres et montés entre plusieurs bras radiaux régulièrement répartis. Chaque secteur de la virole est percé d'ouvertures 16 faisant fonction d'écopes pour un des systèmes de déchargement d'air de l'aéronef (par exemple le système VBV ou variable bleed valve). Les secteurs de virole sont maintenus radialement avec le moyeu de carter (non représenté) par l'intermédiaire d'un système vis écrou traversant des logements 18 de ces secteurs de virole.

Selon l'invention, les secteurs de viroles sont solidarisés avec le bras au moyen d'une platine de fixation 20 qui assure le maintien de la virole sur la base 14A de ce bras tout en absorbant les déplacements relatifs entre la virole et le bras. Cette platine dont la longueur correspond sensiblement à celle de la largeur de la virole et donc aussi à la largeur de la base à laquelle cette virole doit être fixée présente la forme d'une règle plate dont la matière est repoussée (formant des puits s'étendant en deçà (sous) de la surface inférieure de cette règle) au niveau de perçages devant recevoir des moyens de fixation. Par exemple, pour une virole et une base de 350 mm de largeur, on peut choisir une platine d'environ 280 mm de longueur et de quelques millimètres d'épaisseur.

Afin d'assurer la continuité aérodynamique du flux secondaire, la platine sera montée dans une rainure 22 dont l'empreinte (longueur, largeur et hauteur) correspond à la forme de la platine et permet ainsi un alignement entre la face supérieure de la platine et celle de la virole, de sorte à ne pas constituer un obstacle pour le flux d'air.

Pour assurer la liaison à la base du bras, la platine est percée de plusieurs orifices 24A, 24B, 24C, 24D pour recevoir des vis à tête 26A, 26B, 26C, 26D destinées à être visées dans des écrous de type prisonnier 28A, 28B, 28C, 28D fixés par clips sur la base 14A. Comme l'illustre la loupe de la figure 2A, le centrage de la platine est assurée par les puits 30 qui traversent la virole 12A pour venir s'encastrer dans un perçage de la base 14A et sa fixation assurée par ces écrous. Une première partie 32A formant l'écrou proprement dit est réalisé en un premier matériau et une seconde partie 32B, formant cage de retenue et faisant fonction de clip, en un second matériau plus souple que le premier et permettant la liaison avec la base au niveau d'une partie en saillie 34 pratiquée dans le perçage 36 de cette base destiné à recevoir la vis. La cage de retenue 32B qui enserre l'écrou 32A comporte classiquement des pattes qui assurent la retenue de l'écrou en venant se loger sous une collerette de cet écrou. En outre, une rondelle 38 assure le maintien de la cage de retenue 32B contre la base 14A.

Les vis qui peuvent être qualifiées « d'imperdables », sont maintenues captives de la platine par une différence de diamètre du corps de la vis 40 obtenue par exemple par taraudage. Ces vis captives sont, en usine, de préférence vissées ou éventuellement montées par pression dans la platine, et ainsi pré-positionnées pour le montage, leur maintien à la platine (les vis ne pouvant plus que coulisser dans la platine entre leur tête 42 et leur filetage 44) permettant ensuite de réduire le temps de montage/démontage de la virole par un opérateur.

La veine du flux d'air secondaire n'étant pas obligatoirement cylindrique, un détrompage de la platine est nécessaire et réalisé par un perçage différencié des deux trous d'extrémité 24A, 24D qui sont percés chacun à une distance différente de l'extrémité de la platine 20, de sorte qu'il n'est pas possible d'inverser la position de cette platine dans sa rainure 22.

Comme pour la platine elle-même, afin d'assurer la continuité aérodynamique du flux d'air secondaire, la platine comporte un chanfrein 46 au niveau de chacun de ses orifices pour que la tête 42 de chaque vis s'y positionne exactement et soit alors alignée avec la face supérieure de la platine et donc aussi avec celle de la virole, de sorte à ne pas constituer un obstacle pour le flux d'air. On notera que la dimension des têtes de vis conditionnant la hauteur du chanfrein, elle constitue une contrainte à prendre en compte pour la détermination de l'épaisseur de la platine.

Ainsi, le retrait du ou des secteurs de virole permet une meilleure accessibilité à certaines parties du moteur dû notamment à l'existence de passages de servitude sur la partie arrière (Bord de Fuites) des bras radiaux intégrés au carter intermédiaire dit OGV.

## Revendications

1. Structure de carter apte à assurer la jonction mécanique entre le moteur et la nacelle d'un aéronef, comportant :
une virole destinée à entourer le moteur et comprenant une pluralité de secteurs (12A, 12B),
une pluralité de bras radiaux (14) chacun monté entre deux secteurs de virole adjacents et comportant chacun une base (14A),
une pluralité de moyens de fixation de ladite pluralité de secteurs de virole sur lesdites bases de ladite pluralité de bras radiaux,
**caractérisée en ce que** ladite pluralité de moyens de fixation comporte une pluralité de platines (20) montées chacune à effleurement dans des rainures (22) de forme correspondante de ladite pluralité de secteurs de virole et un ensemble de vis à tête (26A-26D) maintenues captives de ladite platine par une différence de diamètre entre leur corps (40) et leur filetage (44),
un ensemble d'écrous prisonniers (28A-28D) étant fixé sur lesdites bases pour, en recevant chacun ledit filetage d'une vis captive dudit ensemble de vis à tête, assurer une liaison solidaire entre ladite pluralité de secteurs de virole et de ladite pluralité de bras radiaux.

2. Structure de carter selon la revendication 1, **caractérisée en ce que** la longueur de ladite platine correspond sensiblement à la largeur de ladite virole.

3. Structure de carter selon la revendication 1, **caractérisée en ce que** pour recevoir lesdites vis captives, ladite platine comporte des orifices (24A-24D) qui s'étendent, en forme de puits, en deçà de sa surface inférieure, lesdits puits assurant en outre, en traversant ladite base, un centrage de ladite platine sur ladite base.

4. Structure de carter selon la revendication 3, **caractérisée en ce que** lesdits orifices comportent à leur entrée des chanfreins (46) pour s'adapter aux têtes (42) desdites vis captives et ainsi permettre leur affleurement.

5. Structure de carter selon l'une quelconque des revendications 1 à 4, **caractérisée en ce que** lesdits écrous prisonniers sont réalisés en deux parties, une première partie (32A) formant l'écrou proprement dit étant réalisé en un premier matériau et une seconde partie (32B), formant cage de retenue et faisant fonction de clip, étant réalisé en un second matériau plus souple que le premier et permettant sa fixation sur ladite base au niveau d'une partie en saillie (34) pratiquée dans un perçage (36) de cette base destiné à recevoir ladite vis captive.

6. Structure de carter selon la revendication 5, **caractérisée en ce que** lesdites première et deuxième parties sont solidarisées entres elles par des pattes qui assurent la retenue de l'écrou en venant se loger sous une collerette dudit écrou.

7. Structure de carter selon l'une quelconque des revendications 1 à 6, **caractérisée en ce que** ladite platine comporte des moyens de détrompage.

8. Moteur d'aéronef comportant une structure de carter selon l'une quelconque des revendications 1 à 7.

## Patentansprüche

1. Gehäusestruktur, die geeignet ist, die mechanische Verbindung zwischen dem Triebwerk und der Gondel eines Flugzeuges sicherzustellen, umfassend:
einen Ring, der dazu bestimmt ist, das Triebwerk zu umschließen, und der eine Vielzahl von Sektoren (12A, 12B) umfasst,
eine Vielzahl von radialen Armen (14), die jeweils zwischen zwei benachbarten Ringsektoren angebracht sind und jeweils eine Basis (14A) aufweisen,
eine Vielzahl von Mitteln zur Befestigung der Vielzahl von Ringsektoren an den Basen der Vielzahl von radialen Armen,
**dadurch gekennzeichnet, dass** die Vielzahl von Befestigungsmitteln eine Vielzahl von Platten (20), die jeweils in Nuten (22) mit entsprechender Form der Vielzahl von Ringsektoren bündig angebracht sind, und eine Anordnung von Kopfschrauben (26A-26D) umfasst, die von der Platte durch eine Durchmesserdifferenz zwischen ihrem Körper (40) und ihrem Gewinde (44) festgehalten werden,
wobei eine Anordnung von unverlierbaren Muttern (28A-28D) an den Basen befestigt ist, um dadurch, dass sie jeweils das Gewinde einer unverlierbaren Schraube der Anordnung von Kopfschrauben aufnehmen, eine feste Verbindung zwischen der Vielzahl von Ringsektoren und der Vielzahl von radialen Armen sicherzustellen.

2. Gehäusestruktur nach Anspruch 1, **dadurch gekennzeichnet, dass** die Länge der Platte im Wesentlichen der Breite des Rings entspricht.

3. Gehäusestruktur nach Anspruch 1, **dadurch gekennzeichnet, dass** die Platte für die Aufnahme der unverlierbaren Schrauben Öffnungen (24A-24D) aufweist, die sich in Form von Senken diesseits ihrer Unterfläche erstrecken, wobei die Senken ferner durch Durchqueren der Basis ein Zentrieren der Platte auf der Basis sicherstellen.

4. Gehäusestruktur nach Anspruch 3, **dadurch gekennzeichnet, dass** die Öffnungen an ihrem Eingang Fasen (46) aufweisen, um sich den Köpfen (42) der unverlierbaren Schrauben anzupassen und somit deren bündiges Abschließen zu ermöglichen.

5. Gehäusestruktur nach einem der Ansprüche 1 bis 4, **dadurch gekennzeichnet, dass** die unverlierbaren Muttern zweiteilig ausgebildet sind, wobei ein erster Teil (32A), der die eigentliche Mutter bildet, aus einem ersten Material gefertigt ist, und ein zweiter Teil (32B), der einen Haltekäfig bildet und als Clip dient, aus einem zweiten Material, welches flexibler als das erste ist, gefertigt ist und seine Befestigung an der Basis im Bereich eines vorspringenden Teils (34), das in einer Bohrung (36) dieser Basis zur Aufnahme der unverlierbaren Schraube ausgebildet ist, ermöglicht.

6. Gehäusestruktur nach Anspruch 5, **dadurch gekennzeichnet, dass** der erste und der zweite Teil durch Laschen, welche das Festhalten der Mutter dadurch sicherstellen, dass sie unter einem Kragen der Mutter zu liegen kommen, fest untereinander verbunden sind.

7. Gehäusestruktur nach einem der Ansprüche 1 bis 6, **dadurch gekennzeichnet, dass** die Platte Unverwechselbarkeitsmittel umfasst.

8. Flugzeugtriebwerk, das eine Gehäusestruktur nach einem der Ansprüche 1 bis 7 umfasst.

## Claims

1. A casing structure able to provide the mechanical junction between the engine and the nacelle of an aircraft, the structure comprising:
• a shroud intended for surrounding the engine and made up of a plurality of sectors (12A, 12B);
• a plurality of radial arms (14), each mounted between two adjacent shroud sectors and each having a base (14A); and
• a plurality of fastener means for fastening said plurality of shroud sectors to said bases of said plurality of radial arms;
the structure being **characterized in that** said plurality of fastener means comprise a plurality of plates (20) each mounted flush in a respective groove (22) of corresponding shape in said plurality of shroud sectors, and a set of headed bolts (26A - 26D) held captive in said plates by their shanks (40) and their threads (44) presenting different diameters;
• a set of captive nuts (28A - 28D) being fastened on said bases to provide respective secure connections between said plurality of shroud sectors and said plurality of radial arms, each of the nuts receiving the thread of a respective captive bolt of said set of headed bolts.

2. A casing structure according to claim 1, **characterized in that** the length of said plate corresponds substantially to the width of said shroud.

3. A casing structure according to claim 1, **characterized in that** in order to receive said captive bolts, said plate includes orifices (24A - 24D) that extend below its bottom surface in the form of wells, which, by passing through said base, also serve to center said plate on said base.

4. A casing structure according to claim 3, **characterized in that** said orifices include chamfers (46) at their inlets in order to match the heads (42) of said captive bolts, and thus enable them to be flush.

5. A casing structure according to any one of claims 1 to 4, **characterized in that** said captive nuts are made in two portions, a first portion (32A) forming the nut proper being made of a first material, and a second portion (32B), forming a retaining cage and acting as a clip, being made of a second material that is more flexible than the first material and that provides the connection with the base via a projecting portion (34) formed in a hole (36) in the base that is to receive said captive bolt.

6. A casing structure according to claim 5, **characterized in that** said first and second portions are secured to each other by tabs that serve to retain the nut by being received under a collar of said nut.

7. A casing structure according to any one of claims 1 to 6, **characterized in that** said plate includes keying means.

8. An aircraft engine including a casing structure according to any one of claims 1 to 7.
